# DEMANDE DE BREVET EUROPEEN

(11) **EP 0 573 338 A1**
(43) Date de publication de la demande: **08.12.1993**
(21) Numéro de dépôt: 93401368.1
(22) Date de dépôt: 28.05.1993
(51) Int. Cl.: H02G 5/06

(54) **Ligne blindée triphasée et son procédé de fabrication**

(30) Priorité: 03.06.1992 FR 9206733
(71) Demandeur: GEC ALSTHOM T ET D SA, F-75016 Paris (FR)
(72) Inventeur: Thuries, Edmond, F-69330 Meyzieu (FR); Tixier, Rene, F-69008 Lyon (FR)
(74) Mandataire: Fournier, Michel

(57) **Abrégé**

Ligne blindée triphasée isolée au gaz sous pression, comprenant une pluralité de tronçons constitués chacun de modules assemblés bout à bout, chaque tronçon étant étanche vis-à-vis de l'extérieur et vis-à-vis des tronçons adjacents, deux tronçons adjacents étant séparés par une jonction coulissante permettant le démontage d'un tronçon sans perte de gaz des tronçons adjacents, caractérisé en ce que le gaz d'isolement est de l'azote sous une pression de quelques dizaines d'hectopascals et préférentiellement comprise entre comprise entre 10 et 15 hectopascals.

## Description

La présente invention est relative à une ligne blindée triphasée et à son procédé de fabrication.

Le demandeur a décrit, dans la demande de brevet français n° 89 13 488 déposée le 16 octobre 1989, une ligne électrique blindée et son procédé de fabrication.

Selon ce document, chaque conducteur de phase est disposé dans une enveloppe tubulaire coaxiale en aluminium et chaque enveloppe en aluminium est entouré d'une enveloppe coaxiale étanche et remplie d'un gaz à bonnes propriétés diélectriques. Les trois enveloppes étanches d'une ligne triphasée sont disposées à l'intérieur d'une galerie souterraine au moyen de supports appropriés.

Il a été mentionné, dans le document, que les trois enveloppes en aluminium d'une ligne triphasée pouvaient être placée dans une enveloppe étanche commune posée à l'intérieur d'une galerie souterraine ou enterrée.

Ce sont les modalités de réalisation de cette solution qui font l'objet de la présente demande de brevet, qui concerne donc les divers éléments constitutifs de la ligne blindée, ainsi que son procédé d'installation sur le terrain.

L'invention a pour objet une ligne blindée triphasée isolée au gaz sous pression, comprenant une pluralité de tronçons constitués chacun de modules assemblés bout à bout, chaque tronçon étant étanche vis-à-vis de l'extérieur et vis-à-vis des tronçons adjacents, deux tronçons adjacents étant séparés par une jonction coulissante permettant le démontage d'un tronçon sans perte de gaz des tronçons adjacents, caractérisé en ce que le gaz d'isolement est de l'azote sous une pression de quelques dizaines d'hectopascals et, préférentiellement, comprise entre 10 et 15 hectopascals.

Selon un mode préféré de réalisation, un module comprend trois barres conductrices disposées parallèlement entre elles selon les arètes d'un trièdre ayant pour base un triangle équilatéral, chaque barre étant entourée d'une enveloppe métallique anti-poussières coaxiale maintenue par des supports, les enveloppes anti-poussières étant maintenues à distance les unes des autres par des entretoises isolantes, l'ensemble ainsi constitué étant entouré d'une enveloppe en acier.

Les supports comprennent une partie cylindrique traversée par la barre conductrice et munie de contacts électriques séparés par des joints d'étanchéité à la poussière, la partie cylindrique portant deux éléments isolants en forme de portion de cône munis de moyen de fixation des enveloppes anti-poussières.

Les entretoises comportent deux parties symétriques par rapport à un plan et assemblées selon ce plan, chaque partie comprenant un collier et un demi-collier, une roulette placée entre le collier et le demi-collier, une troisième roulette étant interposée entre les deux parties symétriques lors de l'assemblage de celles-ci.

Les enveloppes sont constituées chacune de deux profilés à section en demi-cercle, assemblées par vissage sur des barrettes métalliques.

Les supports sont disposés au droit des soudures entre les barres conductrices de deux modules adjacents.

Les entretoises sont placées au droit des soudures entre les enveloppes anti-poussières de deux modules adjacents.

Une jonction coulissante relie deux tronçons adjacents, ladite jonction comportant notamment une plaque métallique circulaire de chaque côté de laquelle s'étendent deux portions cylindriques de diamètre voisin de l'enveloppe en acier, ladite plaque étant percée de trois trous circulaires, à chaque trou étant fixée une première base d'un tronc de cône isolant dont une seconde base est constituée par une portion circulaire d'une pièce métallique, une barre conductrice terminale de l'un des tronçons étant reliée rigidement à ladite pièce métallique, la barre conductrice terminale de l'autre tronçon étant en contact électrique glissant avec ladite pièce métallique par l'intermédiaire d'un manchon soudé à ladite barre conductrice et d'un contact métallique porté par une première pièce ovoïde faisant partie intégrante de ladite pièce métallique.

Avantageusement, ledit contact métallique est de type accordéon.

Ledit contact métallique est encadré par deux joints d'étanchéité à la poussière.

La barre terminale fixée à ladite pièce métallique est fixée par un boulon vissé dans ladite portion circulaire de ladite pièce métallique et accroché à un manchon soudé à l'extrémité de la barre conductrice.

Ledit manchon est en contact électrique avec un contact métallique porté par une seconde pièce ovoïde faisant partie intégrante de ladite pièce métallique.

Avantageusement, ledit contact métallique est du type accordéon.

Ledit contact métallique est encadré par deux joints d'étanchéité à la poussière.

Les parties cylindriques s'étendant de part et d'autre de la plaque métallique circulaire coopèrent, pour assurer l'étanchéité de la ligne vis-à-vis de l'extérieur, respectivement avec des manchons munis chacun d'une colerette de fixation, lesdits manchons étant munis de joints d'étanchéité.

Les manchons des tronçons à raccorder sont solidarisés par des tringles boulonnées traversant une collerette de la plaque métallique.

L'extrémité des tronçons à raccorder, les enveloppes anti-poussières sont munis de manchons soudés coopérant avec des portions cylindriques solidaires ou parties intégrantes de la plaque métallique circulaire.

La jonction coulissante est protégée par une tôle soudée aux manchons.

Une gaine métallique est disposée entre les enveloppes antipoussières et la gaine en acier et isolée de celle-ci par une pluralité d'isolateurs.

L'invention sera bien comprise à la lecture de la description ci-après d'un exemple de mise en oeuvre de l'invention, en référence au dessin annexé dans lequel:
- la figure 1 est une vue schématique partielle d'une ligne blindée triphasée selon un premier mode de réalisation de l'invention,
- la figure 2 est une vue schématique partielle d'une lignre blindée triphasée selon un second mode de réalisation de l'invention,
- la figure 3 est une vue schématique partielle d'une ligne blindée triphasée selon un troisième mode de réalisation,
- la figure 4 est une vue schématique partielle d'une ligne blindée triphasée selon un quatrième mode de réalisation de l'invention,
- la figure 5 est une vue en perspective d'une barre conductrice pour la ligne triphasée de l'invention,
- la figure 6 est une vue en perspective d'un profilé pour la réalisation d'une enveloppe anti-poussières d'une barre conductrice,
- la figure 7 est une vue en perspective d'une barrette métallique pour la fixation de deux profilés d'une enveloppe anti-poussières,
- la figure 8 est une vue en perspective des deux moitiés d'une tôle de protection des extrémités de tronçons de la ligne blindée selon l'invention,
- la figure 9 est une vue en perspective d'une enveloppe extérieure d'une ligne blindée selon l'invention,
- la figure 10 est une vue en perspective d'un support isolant pour les barres conductrices à l'intérieur des enveloppes anti-poussières,
- la figure 11 est une vue en perspective d'une entretoise pour supporter les enveloppes anti-poussières,
- la figure 12 illustre les travaux de terrassement préludant à la construction d'une ligne blindée triphasée selon l'invention,
- la figure 13 montre la mise en place éventuelle d'un caniveau en béton destiné à recevoir la ligne,
- la figure 14 est une vue d'un atelier mobile hors poussière pour le montage des éléments constitutifs de la ligne blindée de l'invention,

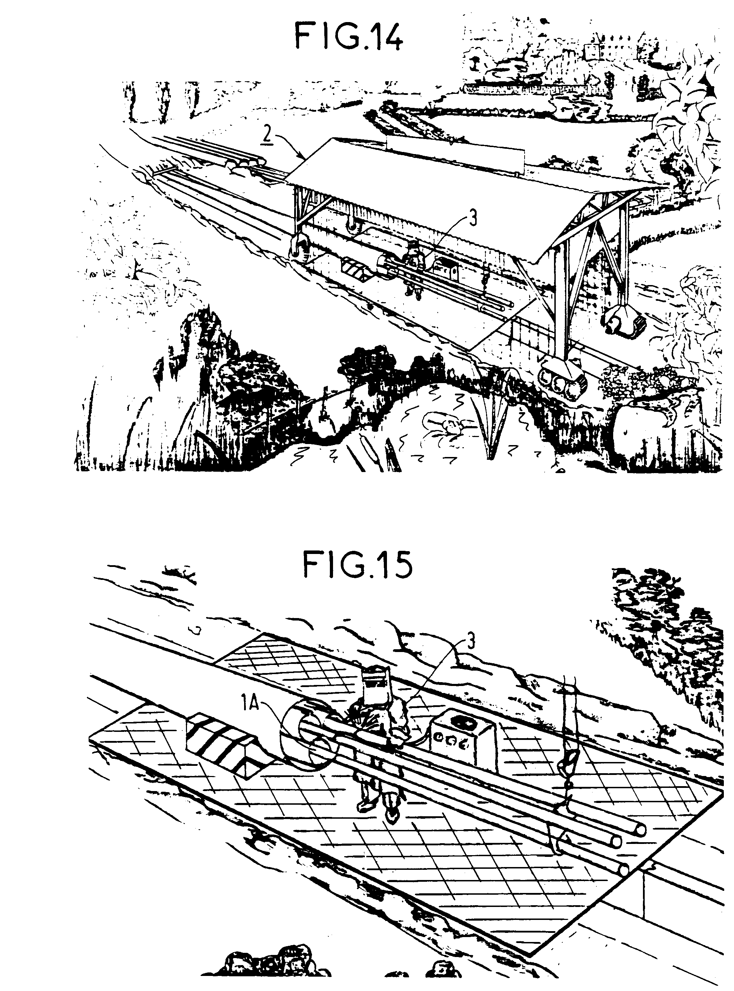

- la figure 15 représente un opérateur effectuant une opération de soudage de deux conducteurs de phase adjacents, à l'intérieur de l'atelier mobile hors poussière,
- la figure 16 illustre la mise en place des supports de barres,
- la figure 17 présente la mise en place des demi-coquilles autour des barres conductrices,
- la figure 18 illustre la mise en place des entretoises isolantes,
- la figure 19 illustre l'opération de mise en place d'une enveloppe d'acier autour de l'ensemble constitué par les trois barres conductrices et de leurs enveloppes anti-poussières,
- la figure 20 montre la soudure de deux enveloppes d'acier adjacentes,
- la figure 21 est une vue en perspective des embouts de barres et du manchon soudés en fin de tronçon,
- la figure 22 est une vue en perspectice d'un manchon d'étanchéité aux poussières fixé aux extrémités des enveloppes anti-poussières en fin et début de tronçon,
- la figure 23 est une vue de l'extrémité d'un tronçon de ligne, après la mise en place des manchons d'étanchéité aux poussières,
- la figure 24 est une vue en coupe axiale partielle de la ligne blindée au droit d'une extrémité de tronçon, montrant notamment la jonction coulissante de fin de tronçon,
- la figure 25 est une vue en perspective d'un embout pour barre conductrice de début de tronçon,
- la figure 26 est une vue en coupe axiale partielle de la ligne blindée à la jonction entre deux tronçons adjacents,
- la figure 27 représente en perspective le manchon d'étanchéité soudé à l'enveloppe extérieure d'un début de tronçon,
- la figure 28 représente schématiquement une portion de ligne blindée munie d'une gaine supplémentaire.

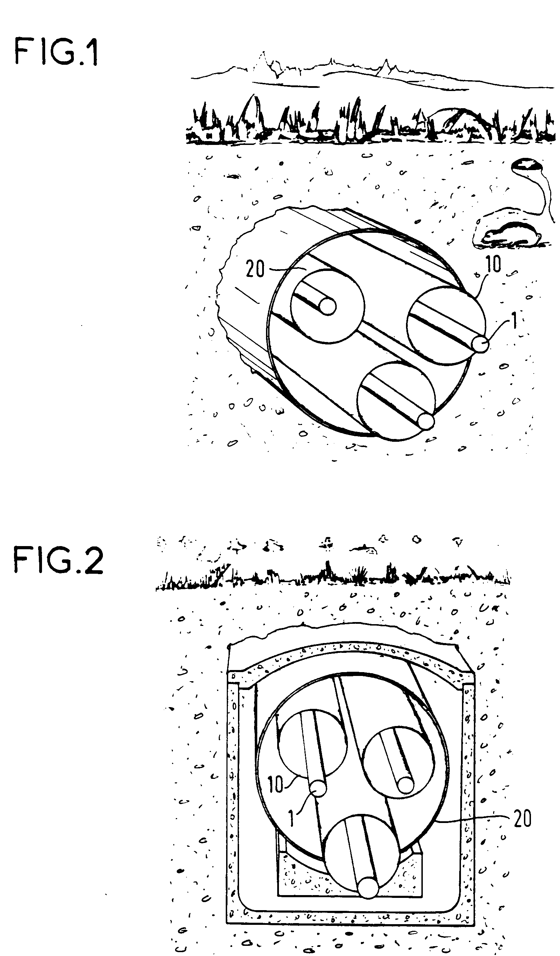

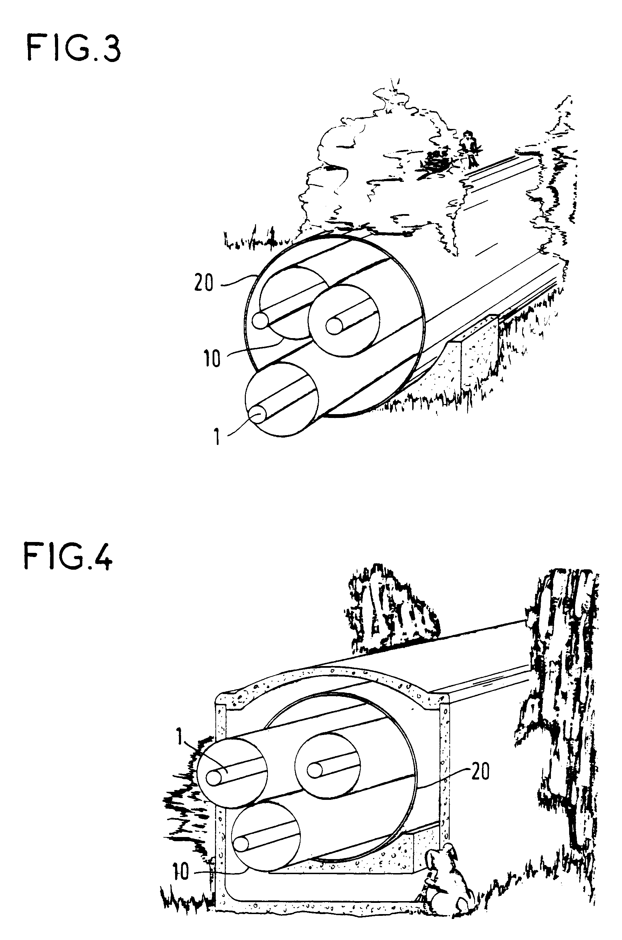

La ligne blindée triphasée de l'invention peut être enterrée, sans protection comme représenté dans la figure 1, ou avec protection d'un coffrage en béton comme le montre la figure 2. En variante, la ligne peut être à l'air libre, soit posée sur le sol avec interposition d'une semelle de béton, comme le montre la figure 3, soit placée dans un coffrage en béton comme illustré dans la figure 4.

Dans tous les exemples, on distingue les barres conductrices 1 de la liaison triphasée, entourées chacune d'une enveloppe métallique, telle que 10, les protégeant des poussières, l'ensemble étant entouré d'un tube extérieur 20 étanche en acier soudé contenant de l'azote sous pression.

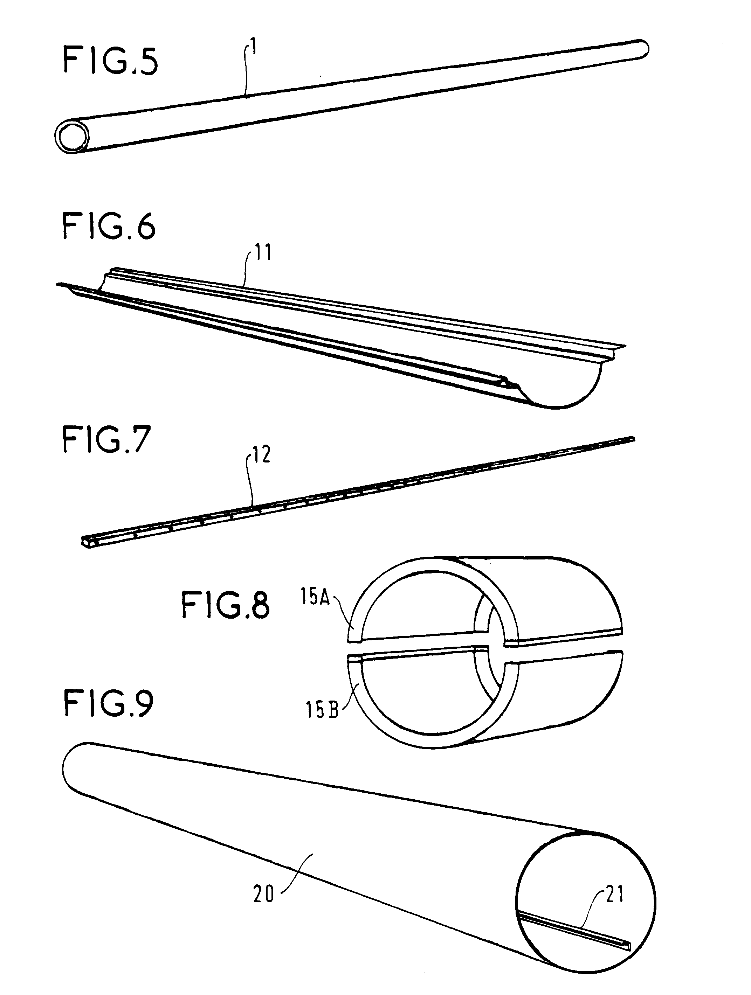

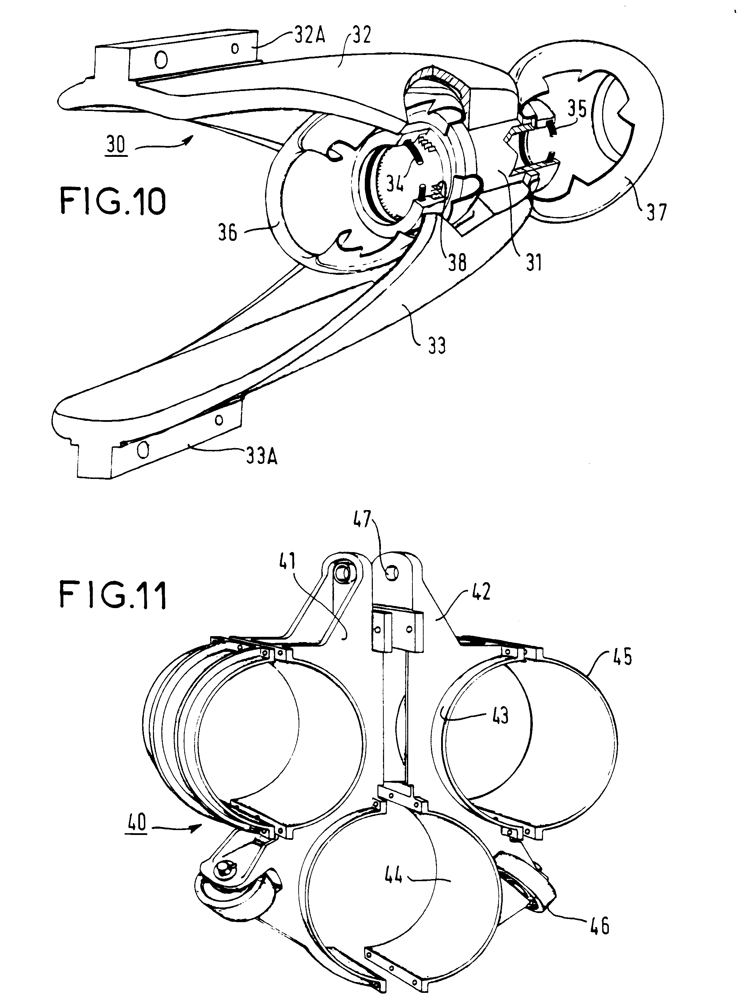

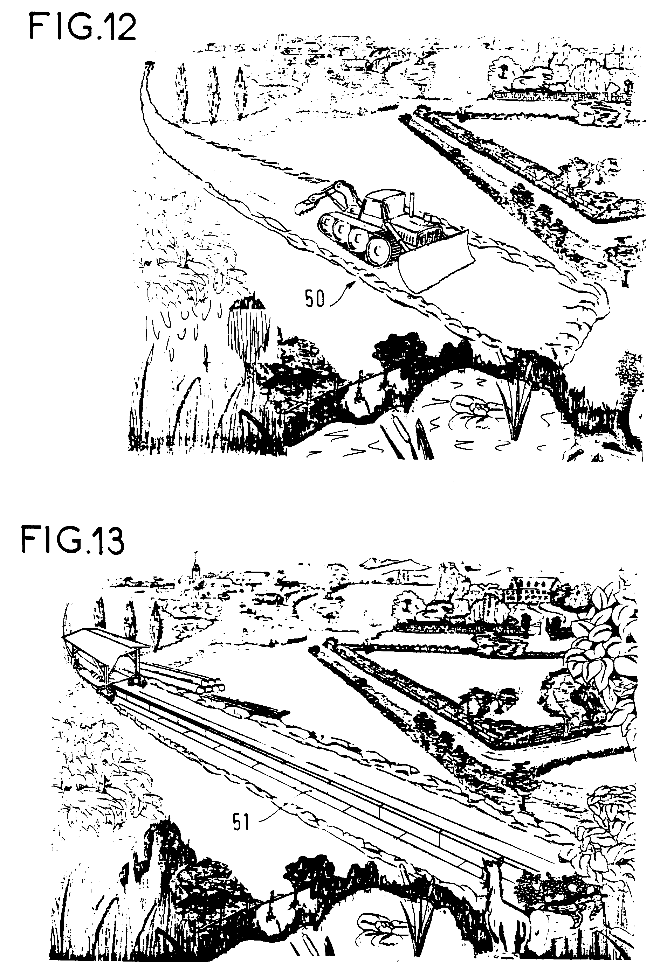

Les éléments constitutifs de la ligne blindée sont approvisionnés sur le site de montage; ils sont représentés dans les figures 5 à 11; on distingue:
- les barres conductrices 1 (Fig. 5), en cuivre, livrées sur le chantier par modules de 10 mètres de longueur environ, et qui seront assemblées sur le site pour former des tronçons de 100 mètres de longueur environ,
- les profilés 11 (Fig. 6), appelés aussi demi-coquilles, pour la réalisation des enveloppes anti-poussières; ces demi-coquilles, de 10 mètres de longueur environ, ont une section en demi-cercle et sont assemblées deux à deux par vissage au moyen de barettes d'assemblage 12 (Fig. 7) pour former une enveloppe tubulaire; les enveloppes sont soudées bout à bout sur le site pour former des tronçons de 100 mètres de longueur; les enveloppes sont de préférence en aluminium de quelques dizièmes de millimètres d'épaisseur;
- les tôles de protection des jonctions de tronçon (Fig. 8), réalisées en demi-coquille d'acier 15A et 15B, et assemblées par soudage comme il sera montré en détail plus loin,
- les enveloppes extérieures 20 (Fig. 9), rélisées en tubes d'acier de longueur voisine de 10 mètres, munies de glissières intérieures soudées 21 dont le rôle sera expliqué plus loin. Ces enveloppes ont une épaisseur suffisante pour supporter sans danger une pression d'azote de quelques dizaines d'hectopascals, cette pression étant préférentiellement comprise entre 10 et 15 hectopascals,
- les supports isolants 30 (Fig. 10), servant à assembler les barres et les demi-coquilles des enveloppes anti-poussières,
- les entretoises isolantes 40 (Fig.11), pour supporter les enveloppes isolantes.

Chacun de ces éléments est utilisé pour constituer un module qui aura donc une longueur préférentielle de 10 mètres; on réalisera des tronçons de préférence constitués de dix modules, donc de longueur préférentielle égale à 100 mètres. Bien entendu ces longueurs ne sont données qu'à titre d'exemple et peuvent être modifiées, par exemple selon la nature du terrain.

Des composants particuliers sont utilisés à l'extrémité de chaque tronçon de 100 mètres; ils seront décrits plus loin.

La figure 12 montre le tracé d'une ligne triphasée selon l'invention; on distingue un engin de terrassement 50 qui nivelle le sol devant lui et creuse derrière lui une tranchée dans laquelle la ligne blindée sera placée et enfouie.

Comme le montre la figure 13, un caniveau en béton 51 peut être mis en place pour recevoir la ligne.

La figure 14 illustre la progression de la construction de la ligne. Un abri mobile léger 2, hors poussières, protège l'opérateur 3 en train de raccorder par soudage deux barres conductrices adjacentes 1A d'une même phase.

Dans ce qui suit, les lettres A, B et C seront utilisées pour distinguer les diverses phases électriques de la ligne; le signe ' (prime) sera utilisé pour distinguer deux éléments homologues de deux tronçons adjacents.

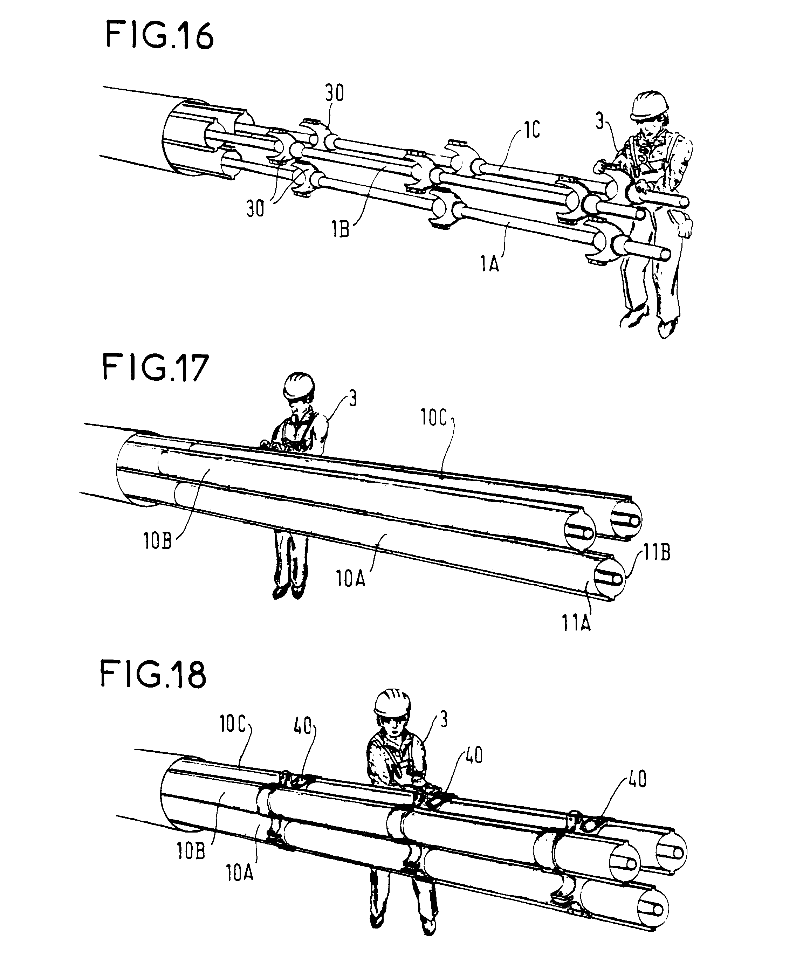

L'opérateur, comme le montre la figure 16, engage dans chacune des barres conductrices de phase 1A, 1B et 1C, des supports isolants 30, et les dispose à intervalles réguliers, préférentiellement compris entre 1 et 5 mètres, de manière que les soudures des barres d'une même phase soient placées à l'intérieur de certains de ces supports.

Le support isolant 30, représenté en perspective et partiellement éclaté dans la figure 10, comprend une partie intérieure cylindrique métallique 31 à l'intérieur de laquelle le barre est engagée; cette partie est réalisée en aluminium ou en cuivre. Sur cette partie sont disposés, symétriquement par rapport à l'axe du support, deux éléments isolants 32 et 33, qui sont des portions de cône; ces éléments sont surmontés chacun d'une partie parallélépipédique 32A, 33A, munie de trous et destinée au positionnement et au vissage des demi-coquilles de protection anti-poussières des barres. Les éléments isolants 32 et 33 sont réalisés de préférence en résine époxy chargée d'alumine, ou en quartz araldite, mais peuvent aussi être réalisés en porcelaine.

La partie cylindrique porte deux rainures munie de joints toriques 34 et 35 destinés à maintenir à l'intérieur du support les poussières qui pourraient se produire. Le support est muni de deux capots pare-effluves métalliques 36 et 37, sensiblement sphériques, situés de part et d'autre du corps cylindrique 31. Ces capots sont portés au potentiel de la barre conductrice au moyen de contacts électriques, tel que le contact de type accordéon 38.

La figure 17 montre l'opérateur en train de fixer, sur les supports isolants des barres conductrices de chaque phase, les enveloppes de protection 10A, 10B et 10C anti-poussières faites chacune de deux demi-coquilles telles que 11A et 11B; la fixation est réalisée par vissage, en disposant de part et d'autre de chaque demi-coquille, et sur chacune des deux zones de contact, des barrettes de fixation telles que celle représentée dans la figure 7; ces barrettes sont de préférence en aluminium.

La figure 18 montre l'opérateur 3 en train de maintenir entre elles les trois phases de la ligne au moyen d'entretoises 40 placées autour des enveloppes 10A, 10B et 10C, de préférence au droit des supports isolants 30.

Une entretoise 40 est représentée en détail dans la figure 11. L'entretoise comporte une ossature réalisée de préférence en polyamide chargée de verre.

L'entretoise comprend deux portions 41 et 42 symétriques par rapport à un plan; seule la portion 42 est décrite en détail: elle comprend deux demi-colliers 43 et 44, disposés de manière que leurs axes, après montage, soient confondus avec les axes de deux barres conductrices de la ligne blindée. L'un des demi-collier, 43 est complété par un demi-collier 45 solidarisé par vissage; l'autre demi-collier, 44, sera complété par le demi-collier correspondant de la portion 41; ainsi, la solidarisation des deux portions 41 et 42 définit trois colliers dont les axes parallèles constituent les arêtes d'un trièdre ayant pour base un triangle équilatéral. Entre le demi-collier 43 et le demi-collier 44 est prévu un logement pour placer une roulette 46; la portion 42 porte à une extrémité un axe 47 qui, en coopérant avec la partie homologue de la portion 41, définit un axe pour une autre roulette non représentée, dont l'axe est à 120 degrés de l'axe de la roulette 46. La juxtaposition des deux portions 41 et 42 permet donc de réaliser une entretoise munie de trois roulettes dont les plans de roulement sont les plans d'un trièdre à base triangulaire inscriptible dans un cercle.

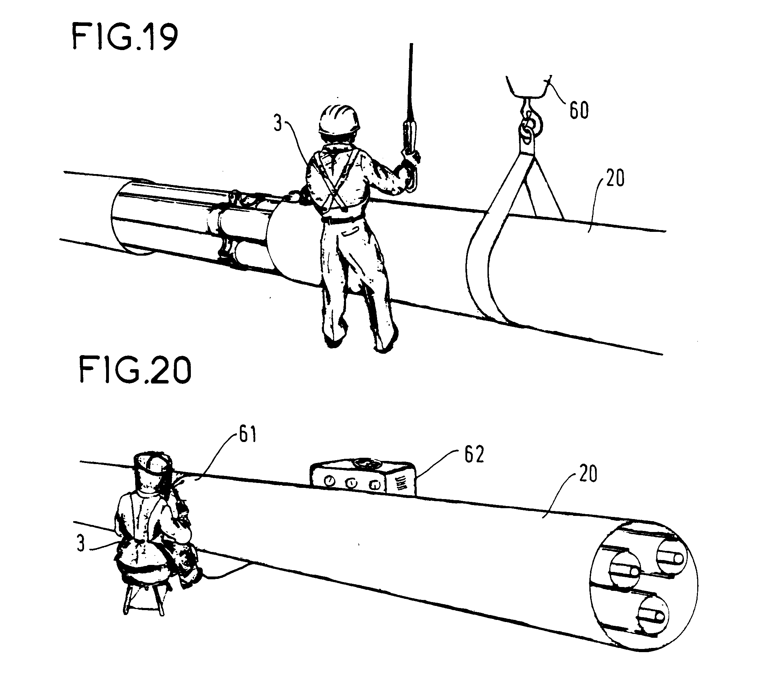

Ces roulettes sont destinées à permettre de placer l'ensemble constitué par les barres conductrices et leurs enveloppes anti-poussières à l'intérieur d'une enveloppe métallique étanche, comme il est montré maintenant en référence à la figure 19.

Dans cette figure, on voit l'opérateur 3 engager, à l'aide d'un engin de levage 60, autour de l'ensemble du type précité, un module d'enveloppe 20 en acier. Comme il a été indiqué en référence à la figure 9, l'enveloppe en acier comporte des glissières 21 servant de guidage aux roulettes et maintenant l'ensemble dans une orientation donnée.

Les enveloppes d'acier sont réalisées en modules de dix mètres de longueur.

La figure 20 montre l'opérateur 3 soudant un module 20 au module adjacent, à l'aide d'un appareil de soudure 61 alimenté par un poste de soudure 62.

Lorsqu'un tronçon de ligne de 100 mètres est constitué, ce dernier est fermé au moyen d'éléments particuliers décrits maintenant. En effet, chaque tronçon est indépendant des tronçons adjacents en ce qui concerne l'isolement à l'azote; de la sorte, si une intervention doit être faite sur un tronçon, il n'est pas nécessaire de vider toute la ligne, mais seulement le tronçon concerné.

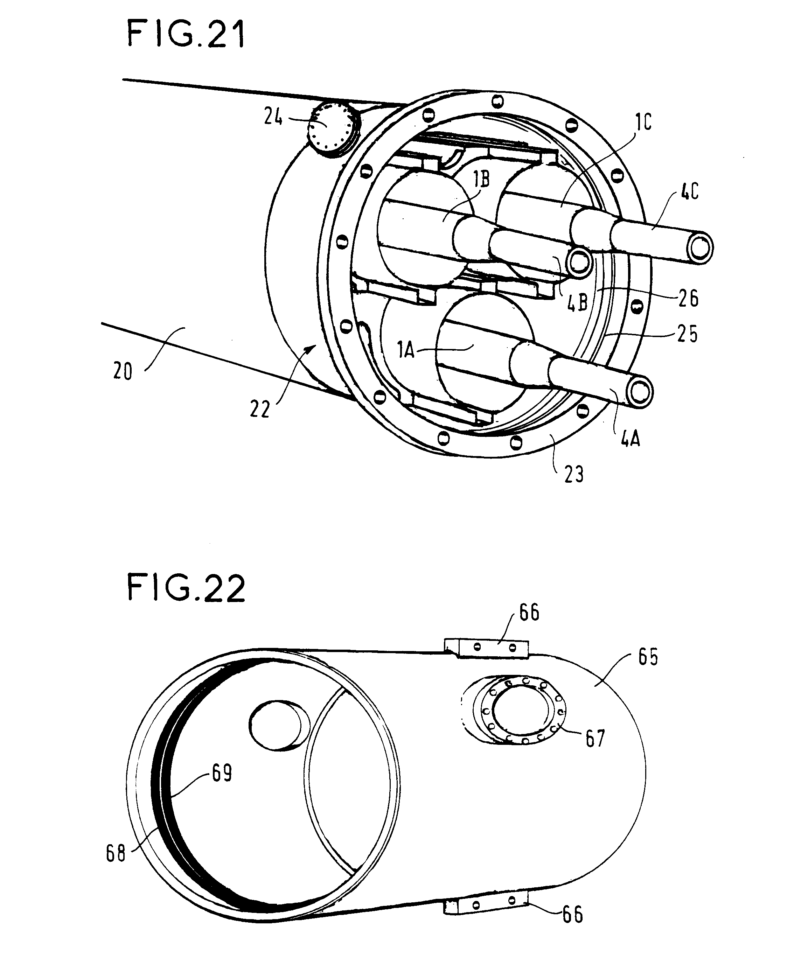

En fin du dernier module du tronçon, comme le montre la figure 21, on soude à l'extrémité des barres conductrices 1A, 1B et 1C, des embouts 4A, 4B et 4C; on soude à l'extrémité de l'enveloppe acier 20 un manchon 22 muni d'une bride de fixation 23, d'au moins un regard 24, et de deux joints d'étanchéité 25 et 26.

Chaque enveloppe anti-poussières 10A, 10B, 10C reçoit un manchon d'extrémité tel que celui représenté dans la figure 22 et référencé globalement 65; ce manchon comporte des blocs de fixation tel que 66, des regards tel que 67 et des rainures intérieures 68 et 69 pour recevoir des joints d'étanchéité toriques.

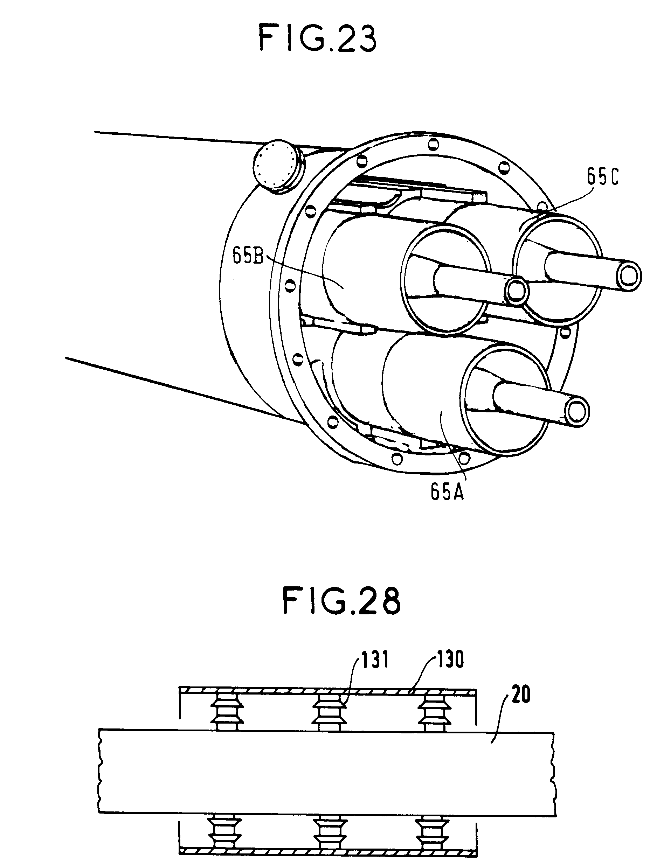

La figure 23 illustre l'extrémité de la ligne après la pose des manchons anti-poussières 65A, 65B et 65C.

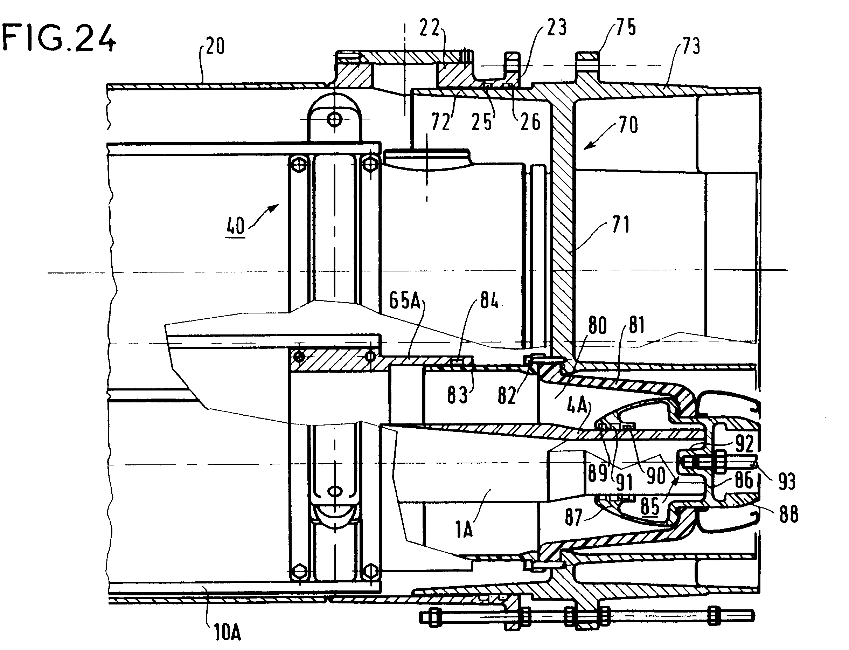

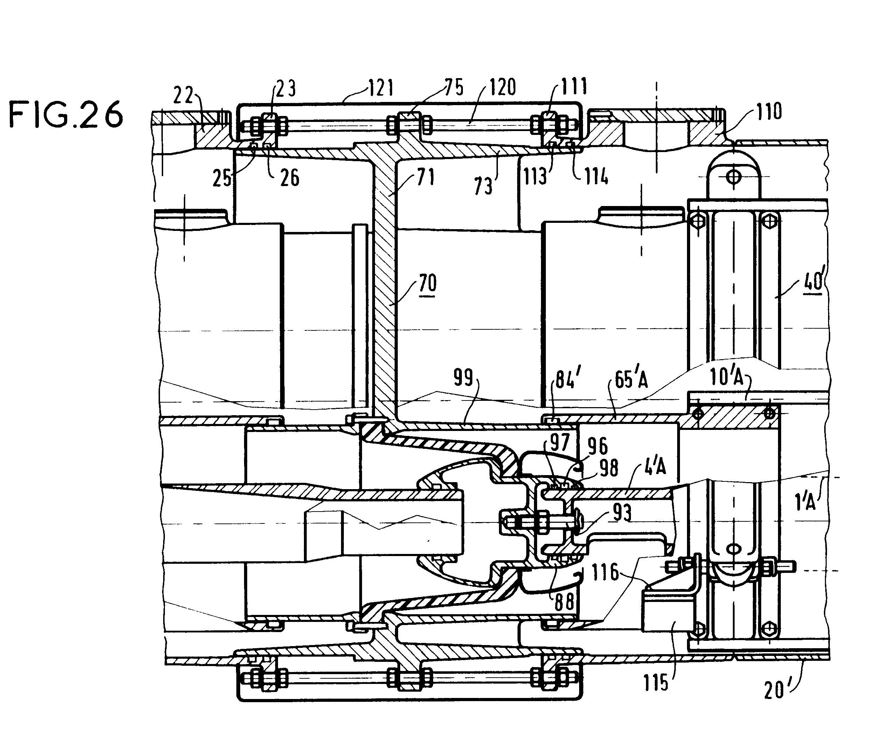

La ligne est alors prête à recevoir la jonction d'extrémité coulissante qui est décrite maitenant en référence à la figure 24.

La jonction coulissante comprend une pièce métallique 70 (en acier par exemple) constituée par un disque 71 prolongé de chaque côté par des portions cylindriques 72 et 73 destinées à coopérer avec les manchons d'extrémité; dans la figure, le manchon 22 d'extrémité de fin de tronçon est représenté; il coopère avec la portion cylindriques 72, pour assurer, grâce aux joints 25 et 26, l'étanchéité du tronçon situé à gauche de la figure. Le manchon de début d'extrémité du tronçon de droite, coopérant avec la portion cylindrique 73, est décrit plus loin.

La jonction coulissante porte une collerette extérieure 75 munie de trous dont le rôle sera précisé plus loin.

Le disque 71 comporte trois ouvertures circulaires équipées de moyens pour assurer l'étanchéité entre les tronçons, l'isolement électrique, et le passage du courant d'un tronçon à l'autre; ces ouvertures correspondent chacune à l'une des phases de la ligne et l'équipement d'une seule ouverture sera décrite en détail, les deux autres ouvertures étant équipées de la même manière.

L'ouverture 80, correspondant à la phase A, visible dans la figure 24, est munie d'un cône isolant 81 fixé par des vis 82 au disque 71; ces même vis servent à fixer un cylindre isolant 83 coopérant avec le manchon 65A précédemment décrit qui porte un joint 84 pour abriter la barre conductrice 1A des poussières; le cône isolant 81 porte une pièce métallique 85 comprenant un disque central 86 de part et d'autre duquel s'étendent deux parties métalliques de forme ovoïde 87 et 88 dans lesquelles s'engagent les barres conductrices.

La partie 87 porte des joints 89 et 90 entourant un contact électrique de type accordéon 91; l'embout 4A de la barre 1A s'engage à l'intérieur de la partie 87 et vient en contact avec le contact 91, assurant la passage du courant de l'embout 4A à la partie 88; l'embout 4A joue librement, en fonction des dilatations de la barre conductrice 1A, à l'intérieur de la pièce 87.

On note que le disque 87 porte une portion centrale cylindrique filetée 92 permettant de recevoir une tige de fixation 93 du manchon d'extrémité 4'A de la pemière barre conductrice 1'A du tronçon de droite; la partie 88 porte des joints 97 et 98 entourant un contact métallique 96 de type accordéon pour coopérer avec l'embout 4'A.

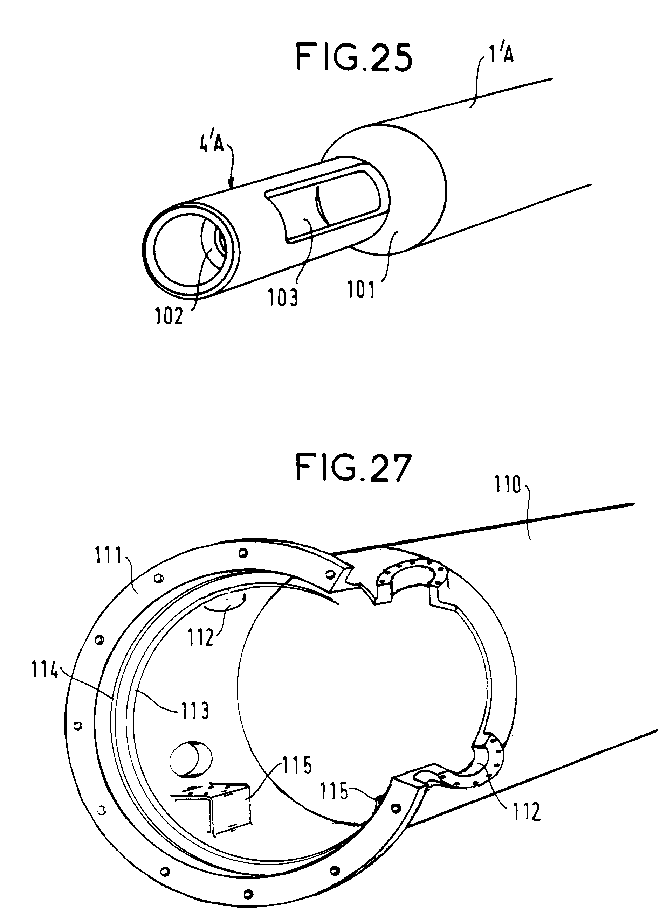

Cet embout est représenté dans la figure 25; il comporte une partie conique 101 pour son raccordement à la barre conductrice 1'A, un anneau intérieur d'ancrage 102 et une ouverture 103 pour le passage des outils de serrage.

La figure 26 explique comment deux tronçons sont assemblés au moyen de la jonction coulissante.

Les barres conductrices du tronçon de droite sont munies de l'embout du type représenté dans la figure 25; on distingue dans la figure 26 la barre conductrice l'A et son embout 4'A, fixé par la tige 93 au disque 85.

A l'enveloppe extérieure 20' du tronçon de droite est soudé un manchon 110 comportant une colerette de fixation 111, des regards 112 pour permettre le montage, des joints d'étanchéité 113, 114, et des pattes soudées 115 dont le rôle sera expliqué plus loin.

Le manchon 110 coopère avec la portion cylindrique 73 pour assurer l'étanchéité du tronçon de droite vis-à-vis de l'extérieur. Les deux tronçons sont raccordés par des tiges boulonnées 120 s'engageant dans la collerette 23 du manchon 22 (tronçon de gauche), dans la collerette 75 de la jonction coulissante et dans la collerette 111 du manchon 110.

L'embout 4'A coopère avec un contact électrique 96 de type accordéon placé dans la pièce ovoïde 88; comme pour le tronçon de gauche, le contact accordéon est encadré par deux joints d'étanchéité 97 et 98 évitant tout risque de propagation des poussières éventuelles produites par le contact.

Les pattes 115 servent à recevoir des équerres 116 pour la solidarisation, à l'aide de boulons 117, du manchon 110 et de la première entretoise 40' du tronçon de droite.

Comme pour le tronçon de gauche, l'enveloppe anti-poussières 10'A du tronçon de droite est prolongée par un manchon anti-poussières 65'A coopérant avec une portion cylindrique 99 de la jonction coulissante, avec interposition d'un joint d'étanchéité 84'.

La jonction est protégée des chocs, des intempéries et des poussières par une tôle cylindrique 121 soudée sur les manchons 22 et 110, et constituée de deux profilés comme le montre la figure 8.

Si une intervention est nécessaire dans l'un des tronçons, par exemple le tronçon de droite de la figure 26, on opère de la manière suivante:
- on scie la tôle 121 et on la dépose,
- on dévisse les tringles 120,
- on fait coulisser la jonction 70 vers le tronçon de gauche,
- on opère de la manière symétrique à l'autre extrémité du tronçon de droite.

Le tronçon de droite peut alors être retiré par déplacement latéral et, par exemple, être remplacé par un tronçon identique en effectuant les mêmes opérations en sens inverse.

On note que le temps d'immobilisation de la ligne est très réduit, car les opérations sont simples, peu nombreuses et ne nécessitent pas l'emploi d'un personnel de haute qualification. La remise en marche de la ligne peut être effectuée rapidement puisqu'un seul tronçon doit être remis en pression.

D'une manière générale, l'enveloppe en acier est mise à la terre, tous les cent mètres environ, et reliée électriquement aux enveloppes anti-poussières des barres conductrices. En cas de défaut interne important, les enveloppes anti-poussières d'aluminium sont perforées mais pas l'enveloppe en acier.

Si, pour des raisons particulières, par exemple en zone urbaine, il n'est pas possible de mettre l'enveloppe à la terre tous les cent mètres et si par exemple les deux points de mise à la terre sont séparés par une grande longueur, par exemple 800 mètres, il peut y avoir un risque qu'un potentiel dangereux se trouve sur l'enveloppe, en cas de défaut et perforation des gaines aluminium. Pour cette raison, on enferme la ligne, sur de telles portions, comme le montre la figure 28, dans une gaine supplémentaire 130, en acier par exemple, isolée de l'enveloppe extérieure 20 au moyen d'isolateurs 131 en porcelaine ou en résine époxy.

L'invention s'applique à la réalisation de lignes triphasées économiques, fiables, d'entretien aisé et respectant l'environnement.

## Revendications

**1/** Ligne blindée triphasée isolée au gaz sous pression, comprenant une pluralité de tronçons constitués chacun de modules assemblés bout à bout, chaque tronçon étant étanche vis-à-vis de l'extérieur et vis-à-vis des tronçons adjacents, deux tronçons adjacents étant séparés par une jonction coulissante permettant le démontage d'un tronçon sans perte de gaz des tronçons adjacents, caractérisé en ce que le gaz d'isolement est de l'azote sous une pression de quelques dizaines d'hectopascals, et préférentiellement comprise entre 10 et 15 hectopascals.

**2/** Ligne blindée selon la revendication 1, caractérisé en ce qu'un module comprend trois barres conductrices (1A, 2A, 3A) disposées parallèlement entre elles selon les arètes d'un trièdre ayant pour base un triangle équilatéral, chaque barre étant entourée d'une enveloppe métallique anti-poussières coaxiale (10A, 10B, 10C) maintenue par des supports (30), les enveloppes anti-poussières étant maintenues à distance les unes des autres par des entretoises isolantes (40), l'ensemble ainsi constitué étant entouré d'une enveloppe en acier (20).

**3/** Ligne blindée selon la revendication 2, caractérisé en ce que les supports (30) comprennet une partie cylindrique (31) traversée par la barre conductrice et munie de contacts électriques (38) séparés par des joints d'étanchéité à la poussière (34, 35), la partie cylindrique portant deux éléments isolants (32, 33) en forme de portion de cône munis de moyen de fixation des enveloppes anti-poussières (10A, 10B, 10C).

**4/** Ligne blindée selon l'une des revendications 2 et 3, caractérisée en ce que les entretoises (40) comportent deux parties symétriques par rapport à un plan et assemblées selon ce plan, chaque partie comprenant un collier (45) et un demi-collier (44), une roulette (46) placée entre le collier (45) et le demi-collier (44), une troisième roulette étant interposée entre les deux parties symétriques lors de l'assemblage de celles-ci.

**5/** Ligne blindée selon l'une des revendications 2 à 4, caractérisée en ce que les enveloppes (10A, 10B, 10C) sont constituées chacune de deux profilés (11) à section en demi-cercle, assemblées par vissage sur des barrettes métalliques (12).

**6/** Ligne blindée selon l'une des revendications 2 à 5, caractérisée en ce que des supports (30) sont disposés au droit de chaque soudure entre les barres conductrices de deux modules adjacents.

**7/** Ligne blindée selon l'une des revendications 2 à 6, caractérisée en ce que des entretoises (40) sont placées au droit de chaque soudure entre les enveloppes anti-poussières de deux modules adjacents.

**8/** Ligne blindée selon l'une des revendication 2 à 7, caractérisée en ce qu'une jonction coulissante (70) relie deux tronçon adjacents, ladite jonction comportant notamment une plaque métallique circulaire (71) de chaque côté de laquelle s'étendent deux portions cylindriques (72, 73) de diamètre voisin de l'enveloppe en acier (20), ladite plaque étant percée de trois trous circulaires, à chaque trou étant fixée une première base d'un tronc de cône isolant (81) dont une seconde base est constituée par une portion circulaire (86) d'une pièce métallique (85), une barre conductrice terminale (1'A) de l'un des tronçons étant reliée rigidement à ladite pièce métallique (85), la barre conductrice terminale (1A) de l'autre tronçon étant en contact électrique glissant avec ladite pièce métallique (85) par l'intermédiaire d'un manchon (4A) soudé à ladite barre conductrice et d'un contact métallique (91) porté par une première pièce ovoïde (87) faisant partie intégrante de ladite pièce métallique.

**9/** Ligne blindée selon la revendication 8, caractérisé en ce que ledit contact métallique (91) est de type accordéon.

**10/** Ligne blindée selon l'une des revendications 7 et 8, caractérisée en ce que ledit contact métallique (91) est encadré par deux joints d'étanchéité (89, 90)à la poussière.

**11/** Ligne blindée selon l'une des revendications 8 à 10, caractérisée en ce que la barre terminale (4'A) fixée à ladite pièce métallique (85) est fixée par un boulon (93) vissé dans ladite portion circulaire (86) de ladite pièce métallique (85) et accroché à un manchon (4'A) soudé à l'extrémité de la barre conductrice (1'A).

**12/** Ligne blindée selon la revendication 11, caractérisée en ce que ledit manchon (4'A) est en contact électrique avec un contact métallique (96) porté par une seconde pièce ovoïde (88) faisant partie intégrante de ladite pièce métallique (85).

**13/** Ligne blindée selon la revendication 12, caractérisée en ce que ledit contact métallique (96)est du type accordéon.

**14/** Ligne blindée selon l'une des revendications 12 et 13, caractérisé en ce que ledit contact métallique (96) est encadré par deux joints (97, 98) d'étanchéité à la poussière.

**15/** Ligne blindée selon l'une des revendications 8 à 14, caractérisé en ce que les parties cylindriques (72, 73) s'étendant de part et d'autre de la plaque métallique circulaire (71) coopèrent, pour assurer l'étanchéité de la ligne vis-à-vis de l'extérieur, respectivement avec des manchons (22, 110) munis chacun d'une colerette (23, 111) de fixation, lesdits manchons étant munis de joints d'étanchéité (25, 26; 113, 114).

**16/** Ligne blindée selon la revendication 15, caractérisé en ce que les manchons (22, 110) des tronçons à raccorder sont solidarisés par des tringles boulonnées (120) traversant une collerette (75) de la plaque métallique (71).

**17/** Ligne blindée selon l'une des revendications 8 à 16, caractérisé en ce qu'à l'extrémité des tronçons à raccorder, les enveloppes anti-poussières (10A, 10'A) sont munis de manchons soudés (65A, 65'A) coopérant avec des portions cylindriques (83, 99) solidaires ou parties intégrantes de la plaque métallique circulaire (71).

**18/** Ligne blindée selon l'une des revendications 15 à 17, caractérisée en ce que la jonction coulissante (70) est protégée par une tôle (121) soudée aux manchons (22, 110).

**19/** Ligne blindée selon l'une des revendications 1 à 18, caractérisée en ce qu'une gaine métallique est disposée entre les enveloppes antipoussières (10A, 10B, 10C) et la gaine en acier (20) et isolée de celle-ci par une pluralité d'isolateurs (131).
